# EUROPÄISCHE PATENTSCHRIFT

(11) **EP 2 352 923 B1**
(45) Veröffentlichungstag und Bekanntmachung des Hinweises auf die Patenterteilung: **21.02.2018**
(21) Anmeldenummer: 09782547.5
(22) Anmeldetag: 03.09.2009
(51) Int. Cl.: F04D 29/26, F04D 29/66

(54) **LÜFTER, VERFAHREN ZUR MONTAGE EINES LÜFTERRADES UND VORRICHTUNG**
FAN, METHOD FOR ASSEMBLING A FAN WHEEL AND DEVICE
VENTILATEUR, PROCEDE DE MONTAGE D'UNE ROUE DE VENTILATEUR AINSI QUE DISPOSITIF

(30) Priorität: 03.11.2008 DE 102008043403
(43) Veröffentlichungstag der Anmeldung: 10.08.2011
(73) Patentinhaber: Robert Bosch GmbH, 70442 Stuttgart (DE)
(72) Erfinder: LINNENBROCK, Klaus, 77815 Buehl (DE)
(86) Internationale Anmeldenummer: PCT/EP2009/061384
(87) Internationale Veröffentlichungsnummer: WO 2010/060658

(56) Entgegenhaltungen:
- EP-A1- 0 962 660
- EP-A2- 1 413 766
- WO-A1-03/040570
- US-A- 3 492 894
- US-A1- 2002 176 780

## Beschreibung

Die Erfindung betrifft einen Lüfter mit einem Mitnehmer und einem Lüfterrad gemäß Patentanspruch 1, ein Verfahren zur Montage des Lüfterrades gemäß Patentanspruch 8 und eine Vorrichtung zur Durchführung des Verfahrens gemäß Patentanspruch 9.

### Stand der Technik

Aus der internationalen Patentanmeldung WO03/040570 A1 ist ein Lüfter mit einer Lüfterbefestigung mit einem dynamischen Unwuchtausgleich bekannt. Der beschriebene Axiallüfter weist einen Nabenbereich zur Verbindung des Axiallüfters mit einer Antriebswelle eines elektrischen Antriebs auf, wobei der Axiallüfter mittels eines Wuchtgewichts statisch gewuchtet ist. Zwischen dem Axiallüfter und der Antriebswelle eines elektrischen Antriebs ist im Nabenbereich eine biegeweiche Verbindung ausgebildet.

Das Auftreten von Unwucht bei einem Lüfter stellt insbesondere bei Lüftern mit hohen Drehzahlen ein Problem dar.

### Offenbarung der Erfindung

Die Aufgabe der Erfindung besteht darin, einen Lüfter, ein Verfahren zur Montage eines Lüfters und eine Vorrichtung zur Durchführung des Verfahrens bereitzustellen, wobei eine Reduzierung der Unwucht des Lüfters erreicht werden kann.

Die Aufgabe der Erfindung wird durch den Lüfter gemäß Patentanspruch 1, durch das Verfahren zur Montage des Lüfters gemäß Patentanspruch 8 und durch die Vorrichtung zur Durchführung des Verfahrens gemäß Patentanspruch 9 gelöst.

Ein Vorteil des Lüfters besteht darin, dass der Mitnehmer und/oder das Lüfterrad mehrere Anlageflächen aufweisen, wobei die Anlageflächen unterschiedliche Höhenpositionen in Bezug auf eine Mittenachse des Mitnehmers bzw. des Lüfterrades aufweisen, und wobei der Mitnehmer mit einer festgelegten Anzahl von Anlageflächen am Lüfterrad anliegt, sodass die Unwucht, insbesondere die dynamische Unwucht reduziert ist. Somit kann eine zwei Ebenenunwucht reduziert werden.

Das erfindungsgemäße Verfahren zur Montage des Lüfterrades mit dem Mitnehmer weist den Vorteil auf, dass eine optimierte Höhenposition zwischen Mitnehmer und Lüfterrad mit Hilfe mehrerer Anlageflächen hergestellt wird, die unterschiedliche Höhenpositionen in Bezug auf eine Mittenebene des Mitnehmers und/oder eine Mittenebene des Lüfterrades aufweisen. Dazu werden verschiedene Positionen, d.h. verschiedene Paarungen von Anlageflächen zwischen Mitnehmer und Lüfterrad eingestellt, ein Maß für die Unwucht gemessen und der Mitnehmer wird dem Lüfterrad in der Position fest verbunden, in der die geringste Unwucht auftritt. Somit können mithilfe der vorgesehenen, unterschiedlich hohen Anlageflächen eine Schrägstellung des Lüfterrades in Bezug auf eine Drehachse bzw. eine Unwucht, insbesondere eine dynamische Unwucht des Lüfterrades reduziert werden.

Die erfindungsgemäße Vorrichtung weist den Vorteil auf, dass ein Fixierbolzen vorgesehen ist, der das Lüfterrad und den Mitnehmer symmetrisch zueinander fixiert, dass Andruckmittel vorgesehen sind, mit denen der Lüfter auf den Mitnehmer in verschiedenen Winkelpositionen gedrückt werden kann. Auf diese Weise kann das Verfahren zum Ermitteln einer optimierten Winkelposition durchgeführt werden, ohne dass eine Verschraubung des Mitnehmers mit dem Lüfterrad erforderlich ist.

Weitere Ausführungsformen der Erfindung sind in den abhängigen Ansprüchen angegebenen.

Abhängig von der gewählten Ausführungsform weisen wenigstens zwei Anlageflächen des Mitnehmers in Bezug auf eine Mittenebene des Mitnehmers unterschiedliche Höhenpositionen auf, wobei die Anlageflächen des Lüfterrades in einer Höhenposition in Bezug auf eine Mittenebene des Lüfterrades angeordnet sind.

In einer weiteren Ausführungsform sind die Anlageflächen des Lüfterrades in wenigstens zwei unterschiedlichen Höhepositionen in Bezug auf eine Mittenebene des Lüfterrades angeordnet, wobei die Anlageflächen des Mitnehmers auf einer Höhenposition in Bezug auf die Mittenachse des Mitnehmers angeordnet sind.

Abhängig von der gewählten Ausführungsform können sowohl die Anlageflächen des Lüfterrades als auch die Anlageflächen des Mitnehmers auf wenigstens zwei unterschiedlichen Höhenpositionen in Bezug auf die entsprechenden Mittenebenen angeordnet sein.

In einer weiteren Ausbildungsform weisen der Mitnehmer und/oder das Lüfterrad Gruppen von Anlageflächen auf, wobei die Gruppen festgelegte Winkelabstände in Bezug auf eine Mitte des Lüfterrades aufweisen. Jede Gruppe weist mehrere Anlageflächen auf, wobei die Anlageflächen einer Gruppe in einer Reihe mit festgelegten Winkelabständen angeordnet sind. Die Anlageflächen einer Gruppe sind in einem festgelegten radialen Abstand zu der Mitte des Lüfterrades angeordnet. Auf diese Weise wird eine Vielzahl von systematisch angeordneten Anlageflächen erhalten, die eine einfache und schnelle Auswahl des Auflagewinkels zwischen dem Lüfterrad und dem Mitnehmer erlauben.

In einer weiteren Ausführungsform sind die Anlageflächen einer Gruppe auf wenigstens zwei unterschiedlichen Höhenpositionen in Bezug auf die Mittenebene des Mitnehmers bzw. die Mittenebene des Lüfterrades angeordnet.

### Kurze Beschreibung der Zeichnungen

Fig. 1 zeigt eine schematische Darstellung eines Lüfters,
Fig. 2 zeigt einen Querschnitt durch einen Teil des Mitnehmers und des Lüfterrades
Fig. 3 zeigt eine Draufsicht auf einen Mitnehmer,
Fig. 4 zeigt einen Schnitt F1 durch einen Mitnehmer,
Fig. 5 zeigt einen Schnitt F2 durch den Mitnehmer,
Fig. 6 zeigt eine Draufsicht auf ein Lüfterrad,
Fig. 7 zeigt eine schematische Darstellung des Mitnehmers und des Lüfterrades in einer ersten Winkelposition.
Fig. 8 zeigt eine schematische Darstellung in einer zweiten Winkelposition.
Fig. 9 zeigt eine schematische Darstellung in einer dritten Winkelposition.
Fig. 10 zeigt schematisch eine Fertigungseinrichtung für die Montage des Lüfterrades auf dem Mitnehmer.
Fig. 11 zeigt einen Teilquerschnitt durch die Fertigungseinrichtung.

### Ausführungsformen der Erfindung

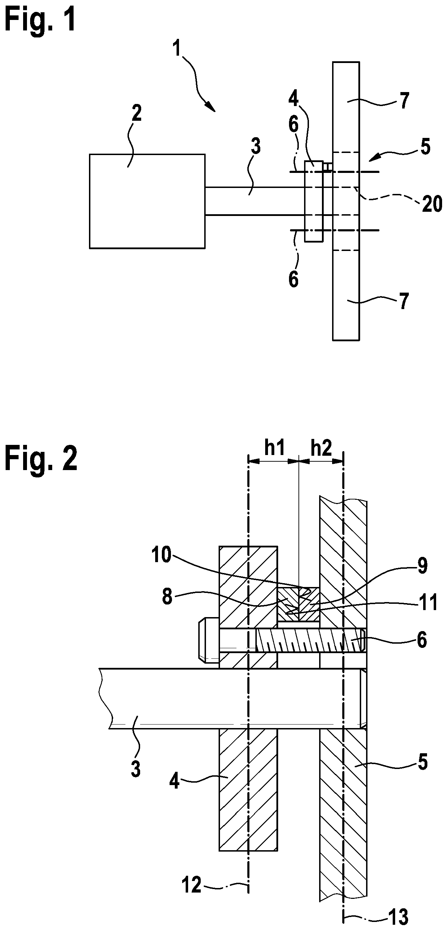

Figur 1 zeigt in einer schematischen Darstellung einen Lüfter 1 mit einem Antrieb 2, der eine Antriebswelle 3 aufweist. Die Antriebswelle 3 ist mit einem Mitnehmer 4 in Form einer Scheibe verbunden. Der Mitnehmer 4 kann auch die Form eines Dreibeins oder jede andere Form aufweisen. Der Mitnehmer 4 ist wenigstens in einer Drehrichtung drehfest mit der Antriebswelle 3 verbunden. Auf einer Frontseite des Mitnehmers 4 ist ein Lüfterrad 5 befestigt. Beispielsweise weist der Mitnehmer 4 eine mittige Ausnehmung auf, durch die die Antriebswelle 3 geführt ist. Der Mitnehmer 4 kann über eine Presspassung mit der Antriebswelle 3 verbunden sein. Zudem kann auch das Lüfterrad 5 eine mittige Ausnehmung 20 aufweisen, in die die Antriebswelle 3 ragt. Auf diese Weise werden sowohl der Mitnehmer 4 als auch das Lüfterrad 5 axial auf eine Drehachse ausgerichtet, die der Antriebswelle entspricht.

Abhängig von der gewählten Ausführungsform kann aber auch nur der Mitnehmer 4 mit der Antriebswelle 3 direkt verbunden sein. Zur Befestigung des Lüfterrads 5 am Mitnehmer 4 sind Befestigungsmittel 6 beispielsweise in Form von Schrauben vorgesehen. Es können jedoch auch andere Arten von Befestigungsmitteln wie z.B. Klebemittel verwendet werden, um das Lüfterrad 5 mit dem Mitnehmer 4 zu verbinden.

Das Lüfterrad 5 weist eine Lüfternabe 6 auf, an deren Außenseite Lüfterflügel 7 ausgebildet sind.

Zur Vermeidung von Unwucht ist es erforderlich, dass das Lüfterrad 5 in einer Ebene senkrecht zur Längsachse der Antriebswelle 3 am Mitnehmer 4 befestigt ist. Dazu weisen der Mitnehmer 4 und das Lüfterrad 5 definierte Anlageflächen auf.

In einer weiteren Ausführungsform ist das Lüfterrad 5 beispielsweise mit einem Mitnehmer 4 auf einem Rotor eines bürstenlosen Motors mit Aussenläufer befestigt. Dabei kann das Lüfterrad 5 auch direkt am Rotor befestigt sein.

Figur 2 zeigt in einer schematischen Darstellung einen Querschnitt durch die Antriebswelle 3, den Mitnehmer 4 und das Lüfterrad 5 im Bereich eines Anlagebereichs. An einer Außenseite des Mitnehmers 4 ist ein Anlageblock 8 ausgebildet. Auf dem Anlageblock 8 liegt ein weiterer Anlageblock 9 auf, der Teil des Lüfterrads 5 ist. Der Anlageblock 8 weist eine erste Anlagefläche 10 auf, der auf einer weiteren Anlagefläche 11 des weiteren Anlageblocks 9 aufliegt. Die Anlagefläche 10 ist in axialer Richtung der Antriebswelle 3 gesehen in einer ersten Höhe h1 in Bezug auf eine Mittenebene 12 des Mitnehmers 4 geführt. Die weitere Anlagefläche 11 des weiteren Anlageblocks 9 ist in einer weiteren Höhenposition h2 in Bezug auf eine zweite Mittenebene 13 des Lüfterrades 5 angeordnet. Die Mittenebenen sind senkrecht zur Antriebswelle 3 angeordnet.

Für eine sichere Ausrichtung sind drei Anlagebereiche mit jeweils einer definierten Anlagefläche 10 des Mitnehmers 4 und einer zugeordneten definierten weiteren Anlagefläche 11 des Lüfterrads 5 vorgesehen. Die drei Anlagebereiche sind dabei vorzugsweise um einen Winkel von 120° beanstandet und liegen auf einer Kreislinie in Bezug auf eine Mitte des Mitnehmers bzw. des Lüfterrades. Abhängig von der gewählten Ausführungsform können auch mehr als drei Anlagebereiche vorgesehen sein. Zudem kann anstelle eines Anlageblocks 8 auch eine Ausnehmung mit einer Anlagefläche vorgesehen sein. In einer weiteren Ausführungsform kann anstelle des weiteren Anlageblocks 9 auch eine weitere Ausnehmung im Lüfterrad 5 ausgebildet sein, in der eine weitere Anlagefläche 11 ausgebildet ist.

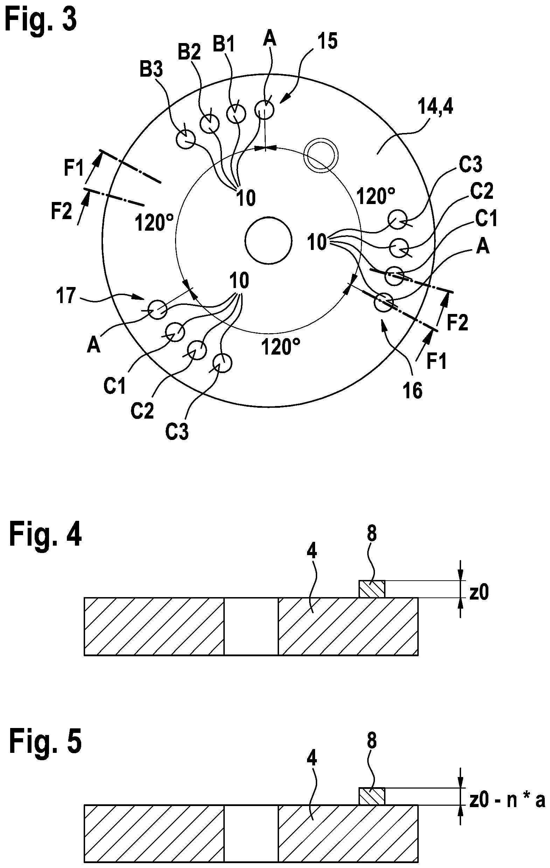

Figur 3 zeigt eine schematische Darstellung auf eine Außenseite des Mitnehmers 4, die im montierten Zustand der Lüfternabe 6 zugeordnet ist. Der Mitnehmer 4 weist auf der Frontseite 14 drei Gruppen 15, 16, 17 von Anlageflächen 10 auf. Jede Gruppe weist in dem dargestellten Ausführungsbeispiel vier Anlageflächen 10 auf. Die Anlageflächen 10 der Gruppen 15, 16, 17 sind auf einem Kreisring mit konstanten Radius zur Mitte 21 des Mitnehmers angeordnet. Zudem weisen die Anlageflächen einer Gruppe jeweils den gleichen Winkelabstand zueinander auf. Weiterhin sind entgegen dem Uhrzeigersinn gesehen jeweils die erste, zweite, dritte und vierte Anlagefläche einer Gruppe in einem 120° Winkel zu der jeweils ersten, zweiten, dritten und vierten Anlagefläche angeordnet.

In dem dargestellten Ausführungsbeispiel weist die jeweils erste Anlagefläche eine Höhenposition z0 in Bezug auf die Oberfläche der Außenseite des Mitnehmers 4 auf. In der ersten Gruppe 15 weisen die im Uhrzeigersinn folgenden zweite, dritte und vierte Anlagefläche B1, B2, B3 eine Höhenposition zn nach folgender Formel auf: Bn: =zn= z0 +n x a, wobei n eine Zahl von 1 bis 10 sein kann und der Parameter a einen Wert zwischen 0,01 und 0,1mm aufweisen kann. Anstelle des Wertebereichs von 0,01mm und 0,1mm kann der Parameter a auch in einem Bereich zwischen 0,01 und 1mm liegen. Mit n sind in der Reihenfolge entgegen dem Uhrzeigersinn die Anlageflächen gekennzeichnet. Die Anlagefläche B1 weist die Höhenposition z1 = z0 + 1 x a = z0 + a auf.

In der zweiten Gruppe 16 weisen die zweite, dritte und vierte Anlagefläche C1, C2, C3 folgende Höhenposition zn in Bezug auf die Oberfläche der Außenseite des Mitnehmers 4 auf: Cn=zn=z0 -(n x a). In der gleichen Weise weisen gegen den Uhrzeigersinn gesehen die zweite, dritte und vierte Anlagefläche C1, C2, C3 der dritten Gruppe 17 eine Höhenposition auf, die durch den Index n und folgender Formel festgelegt ist: Cn hat die Höhenposition zn=z0(n x a) gegenüber der Oberfläche der Außenseite des Mitnehmers 4.

Die Anlagefläche C1 weist somit die Höhenposition z1=z0(1xa) = z0 - a auf. Dies bedeutet, dass die Höhenpositionen der Anlageflächen der ersten Gruppe 15 entgegen dem Uhrzeigersinn stufenweise zunehmen. Die Höhenpositionen der Anlageflächen der zweiten und dritten Gruppe 16, 17 nehmen entgegen dem Uhrzeigersinn stufenweise ab. Abhängig von der gewählten Ausführung können die Anlageflächen der zweiten und dritte Gruppe 15, 16 auch unterschiedliche Höhenpositionen haben. Insbesondere kann die zweite oder dritte Gruppe 15, 16 auch Anlageflächen mit Höhenpositionen entsprechend der der ersten Gruppe 15 haben.

Figur 4 zeigt einen Schnitt F1 durch eine Anlagefläche A, die auf einem Anlageblock 8 in einer Höhenposition z0 in Bezug auf die Oberfläche des Mitnehmers 4 angeordnet ist.

Figur 5 zeigt einen Querschnitt durch eine Anlagefläche C1, der auf einem Anlageblock 8 in einer Höhenposition z1 = z0(1 x a) = z0 - a in Bezug auf die Oberfläche des Mitnehmers 4 angeordnet ist.

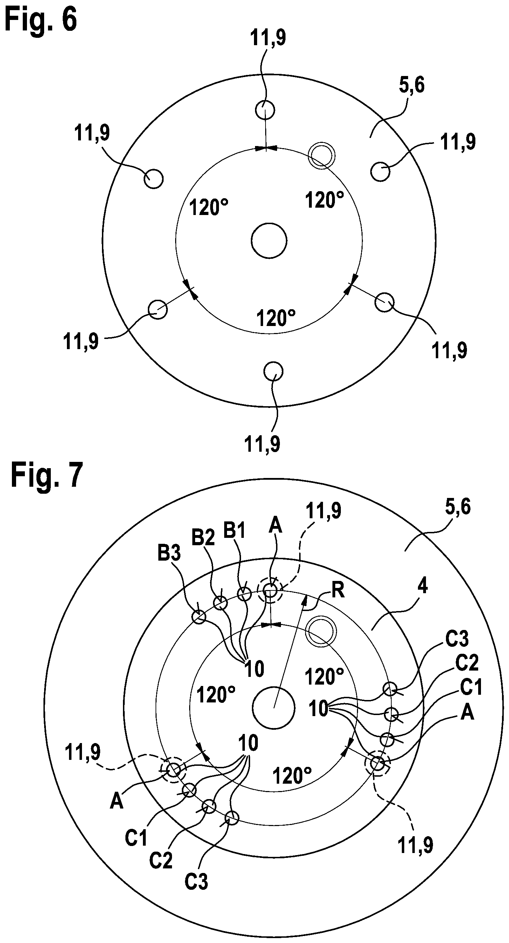

Figur 6 zeigt eine schematische Ansicht des Lüfterrads 5 mit sechs weiteren Anlageflächen 11, wobei nur die Lüfternabe 6 dargestellt ist. Abhängig von der gewählten Ausführungsform können auch nur drei weitere Anlageflächen 11 oder Vielfache von drei weiteren Anlageflächen 11 vorgesehen sein, wobei jeweils drei weitere Anlageflächen 11 einen Winkelabstand von 120° aufweisen. Neben dem dargestellten Ausführungsbeispiel weisen die sechs weiteren Anlageflächen 11 des Lüfterrads 5 jeweils einen Winkelabstand von 60° voneinander auf. Die weiteren Anlageflächen 11 können auf weiteren Anlageblöcken 9 oder in Ausnehmungen des Lüfterrads 5 ausgebildet sein. Die Tiefe der Ausnehmungen muss dabei jedoch kleiner sein als die Höhe des niedrigsten Anlageblocks 8 des Mitnehmers 4.

In der Darstellung des Mitnehmers 4 der Figur 3 stellen die drei ersten Anlageflächen 10 eine erste Auflageposition, jeweils die zweiten Anlageflächen B1, C1, C1 der ersten, zweiten und dritten Gruppe 15, 16, 17 eine zweite Auflageposition, die jeweils dritten Anlageflächen B2, C2, C2 der ersten, zweiten und dritten Gruppe 15, 16, 17 eine dritte Auflageposition und die jeweils vierten Anlageflächen B3, C3, C3 der ersten, zweiten und dritten Gruppe 15, 16, 17 jeweils eine vierte Auflageposition dar, mit der der Mitnehmer 4 auf den entsprechenden weiteren Anlageflächen 11 des Lüfterrads 5 aufgelegt werden kann.

Da in dem gewählten Ausführungsbeispiel die weiteren Anlageflächen 11 auf einer einheitlichen Höhenposition angeordnet sind und die Anlageflächen der ersten Gruppe 15 des Mitnehmers 4 entgegen dem Uhrzeigersinn in der Höhenposition zunehmen, wobei die Anlageflächen der zweiten und dritten Gruppe 16 und 17 entgegen dem Uhrzeigersinn in der Höhenposition abnehmen, können unterschiedliche Schrägstellungen eingestellt werden, abhängig davon, welche Anlagefläche der ersten, zweiten und dritten Gruppe 15, 16, 17 für die Auflage auf dem Lüfterrad 5 verwendet werden.

Figur 7 zeigt eine schematische Darstellung eines montierten Lüfters, bei dem nur der Mitnehmer 4 und die Lüfternabe 6 des Lüfterrades 5 dargestellt sind. In Figur 7 ist das Lüfterrad 5 in einer ersten Winkelposition auf dem Mitnehmer 4 befestigt, wobei das Lüfterrad 5 drei weitere Anlageflächen 11 aufweist, die auf den drei ersten Anlageflächen A der Gruppen 15, 16, 17 des Mitnehmers 4 aufliegen. In dieser Position ist das Lüfterrad 5 parallel zum Mitnehmer 4 ausgerichtet, da die weiteren Anlageflächen 11 des Lüfterrads 5 die gleiche Höhenposition in Bezug auf eine Mittenebene des Lüfterrads 5 aufweisen und zudem die ersten Anlageflächen A der Gruppen 15, 16, 17 des Mitnehmers 4 ebenfalls die gleiche Höhenposition in Bezug auf die Mittenebene des Mitnehmers 4 aufweisen.

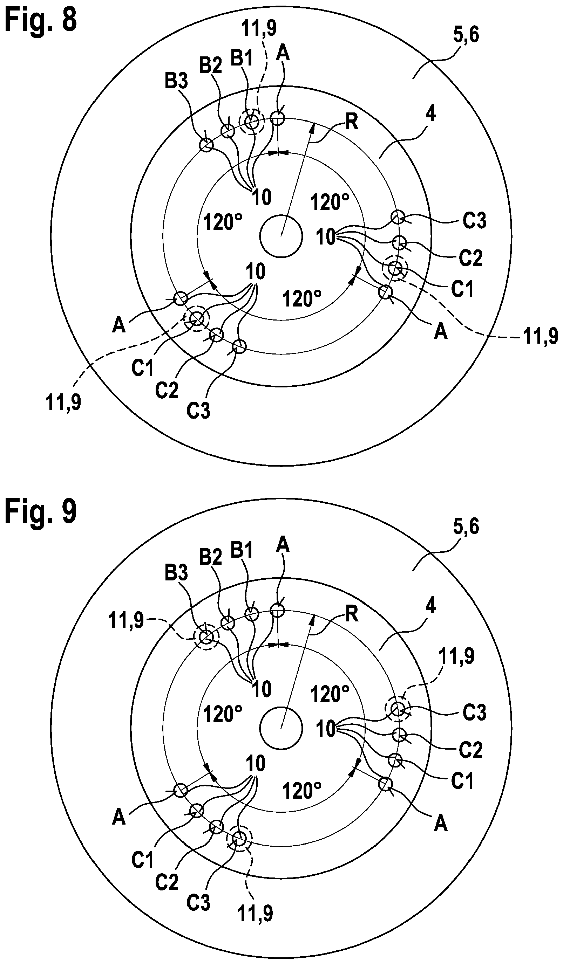

Figur 8 zeigt einen Mitnehmer 4 und ein Lüfterrad 5 eines Lüfters 1, wobei das Lüfterrad 5 in einer zweiten Position auf dem Mitnehmer 4 aufliegt und mit dem Mitnehmer befestigt ist. In der zweiten Position sind die drei weiteren Anlageflächen 11 des Lüfterrads 5 auf den jeweils zweiten entgegen dem Uhrzeigersinn gesehenen Anlageflächen 10, B1, C1, C1 der ersten, zweiten und dritten Gruppe 15, 16, 17 des Mitnehmers 4 angeordnet. Die Höhenposition der zweiten Anlagefläche B1 der ersten Gruppe 15 des Mitnehmers 4 weist folgende Höhenposition auf: z0 + 1 x a = 0 + a. Die Höhenposition der zweiten Anlagefläche der C1 der zweiten Gruppe 16 des Mitnehmers 4 weist die Höhenposition z0(1 x a) = z0 a auf. Ebenso weist die zweite Anlagefläche der dritten Gruppe 16 des Mitnehmers 4 die Höhenposition z0 - (1 x a) = z0 a auf.

Somit ist eine bewusste Schiefstellung zwischen dem Mitnehmer 4 und dem Lüfterrad 5 eingestellt.

Figur 9 zeigt eine schematische Darstellung eines Lüfterrads 5 und eines Mitnehmers 4 des Lüfters 1 in einer dritten Winkelposition. In der dritten Winkelposition liegen die weiteren Anlageflächen 11 des Lüfterrads 5 auf den jeweils entgegen dem Uhrzeigersinn gesehenen vierten Anlageflächen B3, C3, C3 der ersten, zweiten und dritten Gruppe 15, 16, 17 des Mitnehmers 4 auf. In dieser dritten Position ist das Lüfterrad 5 noch stärker als in der zweiten Position gekippt gegenüber dem Mitnehmer 4 angeordnet. Dies ergibt sich daraus, da die Höhenposition der vierten Anlagefläche B3 der ersten Gruppe 15 folgende Höhenposition aufweist: z0 + (3 x a) = z0 + 3a. Zudem weisen die vierten Anlageflächen der zweiten und dritten Gruppe 16, 17 des Mitnehmers 4 folgende Höhenposition auf: z0 - (3 x a) = z0 - 3a. Somit ist der Abstand zwischen dem Lüfterrad 5 und dem Mitnehmer 4 im Bereich der Anlageflächen der zweiten und dritten Gruppe um den Abstand 6a kleiner als im Bereich der vierten Anlagefläche der ersten Gruppe 15.

Somit können mit Hilfe der dargestellten Ausführungsformen vier unterschiedlich stark geneigte Winkelpositionen bei der Montage des Mitnehmers mit dem Lüfterrad 5 hergestellt werden. Eine weitere Variation kann zudem dadurch erreicht werden, dass nicht nur drei weitere Anlageflächen 11 am Lüfterrad 5 vorgesehen sind, sondern wie in Figur 6 dargestellt ist, beispielsweise sechs weiteren Anlageflächen. Somit stehen nicht nur drei weitere Anlageflächen 11, sondern sechs weitere Anlageflächen 11 zur Verfügung, um eine optimale Winkelposition zwischen dem Lüfterrad 5 und dem Mitnehmer 4 einzustellen, bei dem eine bevorzugte, vorzugsweise minimale Unwucht vorliegt.

Die optimale Winkelposition zwischen dem Mitnehmer 4 und dem Lüfterrad 5 wird dadurch ermittelt, dass alle möglichen Winkelpositionen ausprobiert und eine sich ergebende Unwucht gemessen wird. Eine endgültige Befestigung des Lüfterrads 5 auf dem Mitnehmer 4 wird dann in der Winkelposition vorgenommen, in der die geringste Unwucht aufgetreten ist. Auf diese Weise kann mit Hilfe von mehreren Gruppen von Anlageflächen mit unterschiedlichen Höhenpositionen eine bewusste Schiefstellung zwischen dem Lüfterrad 5 und dem Mitnehmer 4 eingestellt werden, mit der eine vorliegende Unwucht ausgeglichen wird.

In dem dargestellten Ausführungsbeispiel sind die Gruppen von unterschiedlich hoch angeordneten Anlageflächen 10 auf dem Mitnehmer 4 angeordnet. Abhängig von der gewählten Ausführungsform können auch die gleichen Gruppen von Anlageflächen 10 mit unterschiedlichen Höhenpositionen auf dem Lüfterrad 5 ausgebildet sein. Auf diese Weise wird die Möglichkeit der Kombination von Winkelstellungen zusätzlich erhöht. Zudem können anstelle des dargestellten Ausführungsbeispiels die Gruppen von unterschiedlich hoch angeordneten weiteren Anlageflächen 10 auf dem Lüfterrad 5 angeordnet sein und der Mitnehmer 4 Anlageflächen 10 mit gleicher Höhenposition, wie im Beispiel des Lüfterrads 5 der Figur 4 dargestellt ist, aufweisen.

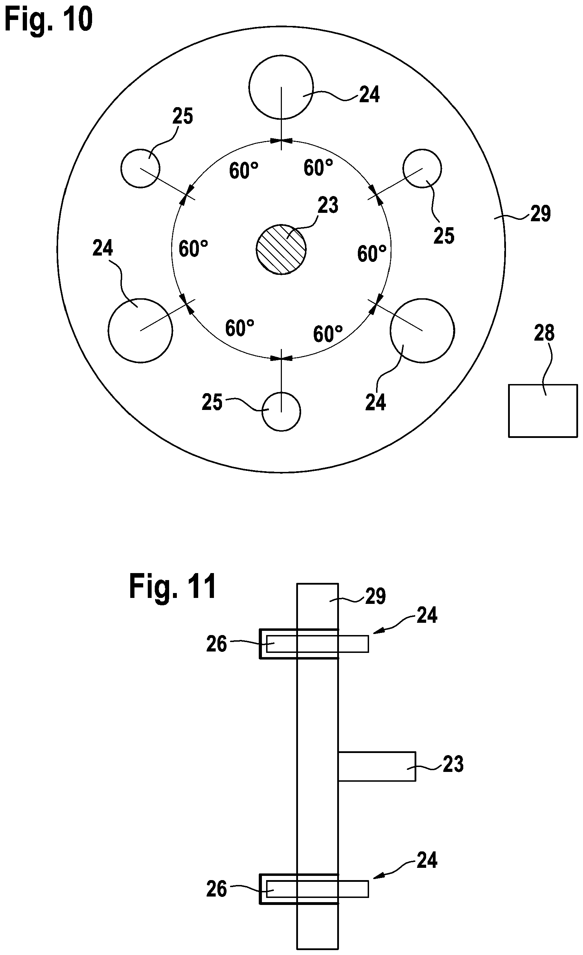

Figur 10 zeigt eine Anordnung zum Testen und zur Montage eines Mitnehmers 4 mit einem Lüfterrad 5. So weist die Anordnung eine Grundplatte einen Zentrierbolzen 23 auf, der durch die mittige Ausnehmung des Mitnehmers 4 und die mittige Ausnehmung des Lüfterrads 5 geführt wird. Anschließend wird mit Hilfe von drei hydraulisch betätigbaren Fixierbolzen 24 das Lüfterrad 5 gegen den Mitnehmer 4 gedrückt, wobei das Lüfterrad 5 mit weiteren Anlageflächen 11 in einer ersten Winkelposition auf Anlageflächen 10 des Mitnehmers 4 aufliegt. Dann wird z.B. eine Planschlagmessung durchgeführt, um die Unwucht an der festgelegten Winkelposition mithilfe eines Messsystems 28 zu ermitteln. Dazu wird die Anordnung mit Lüfterrad 5 in Rotation versetzt und mithilfe des Messsystems 28 die Unwucht der Anordnung Mitnehmer und Lüfterrad mit einer Planschlagmessung bestimmt. Anschließend wird in einer weiteren Winkelposition das Lüfterrad 5 gegen den Mitnehmer 4 mit Hilfe der Fixierbolzen gedrückt und erneut eine Unwucht gemessen. Auf diese Weise wird die Winkelposition ermittelt, bei der die geringste Unwucht auftritt. In dieser Winkelposition wird dann das Lüfterrad 5 mit dem Mitnehmer 4 fest verbunden, insbesondere verschraubt. Dazu werden beispielsweise Autoschraubverbindungen 25 verwendet.

Der Fixierbolzen 24 kann beispielsweise mit Hilfe eines Hydraulikzylinders betätigt werden.

Figur 11 zeigt einen Querschnitt durch eine entsprechende Anordnung einer Grundplatte 29 mit einem Zentrierbolzen 23 und mit Fixierbolzen 24 mit Hydraulikzylindern 26, mit denen eine reibfeste Verbindung zwischen dem Mitnehmer 4 und dem Lüfterrad 5 für die Messung der Unwucht erreicht werden kann.

## Patentansprüche

1. Lüfter (1) mit einem Mitnehmer (4), wobei der Mitnehmer (4) mit einem Lüfterrad (5) verbunden ist, wobei der Mitnehmer (4) mit einer ersten Anzahl von Anlageflächen (10) an weiteren Anlageflächen (11) des Lüfterrad anliegt, **dadurch gekennzeichnet, dass** der Mitnehmer (4) und/oder das Lüfterrad (5) mehr als die erste Anzahl von Anlageflächen (10) bzw. weitere Anlageflächen (11) aufweist, wobei wenigstens zwei Anlageflächen (10) bzw. weitere Anlageflächen (11) unterschiedliche Höhenpositionen in Bezug auf eine Mittenebene oder Oberfläche des Mitnehmers (4) bzw. des Lüfterrades (5) aufweisen.

2. Lüfter nach Anspruch 1, wobei die erste Anzahl drei ist, wobei die drei Anlageflächen (10, 11) im Winkel von 120° versetzt zu einer gemeinsamen Mitte des Mitnehmers (4) angeordnet sind.

3. Lüfter nach einem der Ansprüche 1 oder 2, wobei wenigstens ein Teil der Anlageflächen (10) des Mitnehmers (4) unterschiedliche Höhenpositionen aufweist, und wobei nur ein Teil der Anlageflächen (10) des Mitnehmers (4) auf weiteren Anlageflächen (11) des Lüfterrades (5) aufliegt.

4. Lüfter nach einem der Ansprüche 1 bis 3, wobei ein Teil der weiteren Anlageflächen (11) des Lüfterrades (5) unterschiedliche Höhenpositionen aufweist, und wobei nur ein Teil der weiteren Anlageflächen (11) des Lüfterrades (5) auf Anlageflächen (10) des Mitnehmers (4) aufliegen.

5. Lüfter nach einem der Ansprüche 1 bis 4, wobei der Mitnehmer Gruppen (15, 16, 17) von Anlageflächen aufweist, wobei die Gruppen (15, 16, 17) festgelegte Winkelabstände in Bezug auf eine Mitte des Mitnehmers (4) aufweisen, wobei jede Gruppe (15, 16, 17) mehrere Anlageflächen (A, B1, B2, B3; A, C1, C2, C3) aufweist, wobei die Anlageflächen einer Gruppe (15, 16, 17) in einer Reihe mit festgelegten Winkelabständen in Bezug auf die Mitte des Mitnehmers (4) angeordnet sind, wobei die Anlageflächen der Gruppen (15, 16, 17) in einem festgelegten radialen Abstand zu der Mitte des Mitnehmers (4) angeordnet sind.

6. Lüfter nach einem der Ansprüche 1 bis 5, wobei das Lüfterrad (5) Gruppen von Anlageflächen aufweist, wobei die Gruppen festgelegte Winkelabstände in Bezug auf eine Mitte des Lüfterrads aufweisen, wobei jede Gruppe mehrere Anlageflächen aufweist, wobei die Anlageflächen der Gruppen in einer Reihe mit festgelegten Winkelabständen in Bezug auf die Mitte der Lüfterrad angeordnet sind, wobei die Anlageflächen einer Gruppe in einem festgelegten radialen Abstand zu der Mitte des Lüfterrades angeordnet sind.

7. Lüfter nach einem der Ansprüche 5 oder 6, wobei die Anlageflächen (10, 11) einer Gruppe (15, 16, 17) unterschiedliche Höhenpositionen in Bezug auf eine Mittenebene (12) des Mitnehmers (4) bzw. eine Mittenebene (13) des Lüfterrades aufweisen.

8. Verfahren zur Montage eines Lüfterrades (5) auf einen Mitnehmer (4) eines Lüfters (1), wobei der Mitnehmer (4) und das Lüfterrad (5) mehrere Anlageflächen (10, 11) aufweist, wobei wenigstens ein Teil der Anlageflächen (10, 11) unterschiedliche Höhenpositionen aufweist, und wobei wenigstens ein Teil der Anlageflächen des Mitnehmers (4) symmetrisch zu einem Teil der Anlageflächen des Lüfterrades (5) angeordnet sind, wobei der Mitnehmer (4) und das Lüfterrad (5) in verschiedenen Winkelpositionen reibschlüssig aufeinander gedrückt werden, wobei in den verschiedenen Winkelpositionen der Mitnehmer (4) und der Lüfter (5) aufgrund der unterschiedlichen Höhen der Anlageflächen unterschiedliche Schiefstellungen aufweisen, wobei in den verschiedenen Winkelpositionen ein Maß für eine Unwucht des Lüfters (5) gemessen wird, wobei die Winkelposition mit einer bevorzugten, insbesondere geringsten Unwucht ermittelt wird, und wobei anschließend der Mitnehmer (4) mit dem Lüfterrad (5) in der Winkelposition mit der bevorzugten Unwucht fest verbunden wird.

9. Vorrichtung zur Durchführung des Verfahrens nach Anspruch 8, wobei ein Fixierbolzen vorgesehen ist, der in ein mittiges Loch des Lüfterrades (5) und des Mitnehmers (4) des Lüfters einführbar ist, um den Mitnehmer (4) und das Lüfterrad (5) mittensymmetrisch auszurichten, wobei ein Andruckmittel (24, 26) vorgesehen ist, mit dem das Lüfterrad (4) mit weiteren Anlageflächen (11) auf Anlageflächen (10) des Mitnehmers (4) gedrückt werden kann, wobei das Lüfterrad in Drehung versetzt wird, wobei ein Messsystem (28) vorgesehen ist, mit dem eine Unwucht des Lüfterrades (5) erfassbar ist.

10. Vorrichtung nach Anspruch 9, wobei das Andruckmittel mehrere Fixierbolzen (24) aufweist, die das Lüfterrad an mehreren Positionen gegen den Mitnehmer (4) drücken.

## Claims

1. Fan (1) with a driving dog (4), wherein the driving dog (4) is connected to a fan wheel (5), wherein the driving dog (4) butts by a first number of contact surfaces (10) against additional contact surfaces (11) of the fan wheel, **characterized in that** the driving dog (4) and/or the fan wheel (5) has or have more than the first number of contact surfaces (10) or additional contact surfaces (11), wherein at least two contact surfaces (10) or additional contact surfaces (11) have different height positions with regard to a center plane or surface of the driving dog (4) or of the fan wheel (5).

2. Fan according to Claim 1, wherein the first number is three, wherein the three contact surfaces (10, 11) are arranged in an offset manner to a common center of the driving dog (4) at an angle of 120°.

3. Fan according to one of Claims 1 or 2, wherein at least some of the contact surfaces (10) of the driving dog (4) have different height positions, and wherein only some of the contact surfaces (10) of the driving dog (4) bear on additional contact surfaces (11) of the fan wheel (5).

4. Fan according to one of Claims 1 to 3, wherein some of the additional contact surfaces (11) of the fan wheel (5) have different height positions, and wherein only some of the additional contact surfaces (11) of the fan wheel (5) bear on contact surfaces (10) of the driving dog (4).

5. Fan according to one of Claims 1 to 4, wherein the driving dog has groups (15, 16, 17) of contact surfaces, wherein the groups (15, 16, 17) have fixed angular spacings with regard to a center of the driving dog (4), wherein each group (15, 16, 17) has a plurality of contact surfaces (A, B1, B2, B3; A, C1, C2, C3), wherein the contact surfaces of a group (15, 16, 17) are arranged in a row with fixed angular spacings with regard to the center of the driving dog (4), wherein the contact surfaces of the groups (15, 16, 17) are arranged at a fixed radial distance from the middle of the driving dog (4).

6. Fan according to one of Claims 1 to 5, wherein the fan wheel (5) has groups of contact surfaces, wherein the groups have fixed angular spacings with regard to a center of the fan wheel, wherein each group has a plurality of contact surfaces, wherein the contact surfaces of the groups are arranged in a row with fixed angular spacings with regard to the center of the fan wheel, wherein the contact surfaces of a group are arranged at a fixed radial distance from the middle of the fan wheel.

7. Fan according to one of Claims 5 or 6, wherein the contact surfaces (10, 11) of a group (15, 16, 17) have different height positions with regard to a center plane (12) of the driving dog (4) or to a center plane (13) of the fan wheel.

8. Method for assembling a fan wheel (5) on a driving dog (4) of a fan (1), wherein the driving dog (4) and the fan wheel (5) have a plurality of contact surfaces (10, 11), wherein at least some of the contact surfaces (10, 11) have different height positions, and wherein at least some of the contact surfaces of the driving dog (4) are arranged symmetrically to some of the contact surfaces of the fan wheel (5), wherein the driving dog (4) and the fan wheel (5) are pressed onto each other in a frictionally engaging manner in different angular positions, wherein in the different angular positions the driving dog (4) and the fan wheel (5), on account of the different heights of the contact surfaces, have different inclined positions, wherein in the different angular positions a level for an unbalance of the fan wheel (5) is measured, wherein the angular position with a preferred, especially lowest, unbalance is determined, and wherein the driving dog (4) is then fixedly connected to the fan wheel (5) in the angular position with the preferred unbalance.

9. Device for implementing the method according to Claim 8, wherein provision is made for a fixing bolt which can be inserted into a center hole of the fan wheel (5) and of the driving dog (4) of the fan in order to center-symmetrically align the driving dog (4) and the fan wheel (5), wherein provision is made for a pressing-on means (24, 26) with which the fan wheel (4) can be pressed by additional contact surfaces (11) onto contact surfaces (10) of the driving dog (4), wherein the fan wheel is set in rotation, wherein provision is made for a measuring system (28) with which an unbalance of the fan wheel (5) can be recorded.

10. Device according to Claim 9, wherein the pressing-on means has a plurality of fixing bolts (24) which press the fan wheel against the driving dog (4) in a plurality of positions.

## Revendications

1. Ventilateur (1) comprenant un dispositif d'entraînement (4), le dispositif d'entraînement (4) étant relié à une roue de ventilateur (5), le dispositif d'entraînement (4) s'appliquant avec une première pluralité de surfaces d'appui (10) contre des surfaces d'appui supplémentaires (11) de la roue de ventilateur, **caractérisé en ce que** le dispositif d'entraînement (4) et/ou la roue de ventilateur (5) présentent plus que la première pluralité de surfaces d'appui (10) ou que les surfaces d'appui supplémentaires (11), au moins deux surfaces d'appui (10) ou surfaces d'appui supplémentaires (11) présentant des positions en hauteur différentes par rapport à un plan médian ou par rapport à la surface du dispositif d'entraînement (4) ou de la roue de ventilateur (5) .

2. Ventilateur selon la revendication 1, dans lequel la première pluralité est de trois, les trois surfaces d'appui (10, 11) étant décalées d'un angle de 120° par rapport à un centre commun du dispositif d'entraînement (4).

3. Ventilateur selon l'une quelconque des revendications 1 ou 2, dans lequel au moins une partie des surfaces d'appui (10) du dispositif d'entraînement (4) présente des positions en hauteur différentes, et seulement une partie des surfaces d'appui (10) du dispositif d'entraînement (4) repose sur des surfaces d'appui supplémentaires (11) de la roue de ventilateur (5) .

4. Ventilateur selon l'une quelconque des revendications 1 à 3, dans lequel une partie des surfaces d'appui supplémentaires (11) de la roue de ventilateur (5) présente des positions en hauteur différentes, et seulement une partie des surfaces d'appui supplémentaires (11) de la roue de ventilateur (5) repose sur des surfaces d'appui (10) du dispositif d'entraînement (4).

5. Ventilateur selon l'une quelconque des revendications 1 à 4, dans lequel le dispositif d'entraînement présente des groupes (15, 16, 17) de surfaces d'appui, les groupes (15, 16, 17) présentant des espacements angulaires fixes par rapport à un centre du dispositif d'entraînement (4), chaque groupe (15, 16, 17) présentant plusieurs surfaces d'appui (A, B1, B2, B3 ; A, C1, C2, C3), les surfaces d'appui d'un groupe (15, 16, 17) étant disposées dans une rangée avec des espacements angulaires fixes par rapport au centre du dispositif d'entraînement (4), les surfaces d'appui des groupes (15, 16, 17) étant disposées à une distance radiale fixe par rapport au centre du dispositif d'entraînement (4).

6. Ventilateur selon l'une quelconque des revendications 1 à 5, dans lequel la roue de ventilateur (5) présente des groupes de surfaces d'appui, les groupes présentant des espacements angulaires fixes par rapport à un centre de la roue de ventilateur, chaque groupe présentant plusieurs surfaces d'appui, les surfaces d'appui des groupes étant disposées dans une rangée avec des espacements angulaires fixes par rapport au centre de la roue de ventilateur, les surfaces d'appui d'un groupe étant disposées à une distance radiale fixe par rapport au centre de la roue de ventilateur.

7. Ventilateur selon l'une quelconque des revendications 5 ou 6, dans lequel les surfaces d'appui (10, 11) d'un groupe (15, 16, 17) présentent des positions en hauteur différentes par rapport à un plan médian (12) du dispositif d'entraînement (4) ou par rapport à un plan médian (13) de la roue de ventilateur.

8. Procédé de montage d'une roue de ventilateur (5) sur un dispositif d'entraînement (4) d'un ventilateur (1), le dispositif d'entraînement (4) et la roue de ventilateur (5) présentant plusieurs surfaces d'appui (10, 11), au moins une partie des surfaces d'appui (10, 11) présentant des positions en hauteur différentes, et au moins une partie des surfaces d'appui du dispositif d'entraînement (4) étant disposée symétriquement par rapport à une partie des surfaces d'appui de la roue de ventilateur (5), le dispositif d'entraînement (4) et la roue de ventilateur (5) étant pressés l'un contre l'autre par engagement par friction dans différentes positions angulaires, le dispositif d'entraînement (4) et le ventilateur (5), dans les différentes positions angulaires, présentant, du fait des hauteurs différentes des surfaces d'appui, différentes positions obliques, une dimension pour un déséquilibre du ventilateur (5) étant mesurée dans les différentes positions angulaires, la position angulaire étant déterminée avec un déséquilibre préféré, en particulier minimal, et ensuite le dispositif d'entraînement (4) étant connecté fixement à la roue de ventilateur (5) dans la position angulaire ayant le déséquilibre préféré.

9. Dispositif pour mettre en oeuvre le procédé selon la revendication 8, dans lequel il est prévu un boulon de fixation qui peut être introduit dans un trou central de la roue de ventilateur (5) et du dispositif d'entraînement (4) du ventilateur, afin d'orienter symétriquement par rapport au centre le dispositif d'entraînement (4) et la roue de ventilateur (5), un moyen de pressage (24, 26) étant prévu, avec lequel la roue de ventilateur (4) peut être pressée avec des surfaces d'appui supplémentaires (11) contre des surfaces d'appui (10) du dispositif d'entraînement (4), la roue de ventilateur étant mise en rotation, un système de mesure (26) étant prévu, avec lequel un déséquilibre de la roue de ventilateur (5) peut être détecté.

10. Dispositif selon la revendication 9, dans lequel le moyen de pressage présente plusieurs boulons de fixation (24) qui pressent la roue de ventilateur dans plusieurs positions contre le dispositif d'entraînement (4).
